# DEMANDE DE BREVET EUROPEEN

(11) **EP 2 052 801 A1**
(43) Date de publication de la demande: **29.04.2009**
(21) Numéro de dépôt: 08380040.9
(22) Date de dépôt: 15.02.2008
(51) Int. Cl.: B23B 31/02

(54) **Adaptateur pour porte-outils à système de refroidissement employant une quantité minime de lubrifiant**

(30) Priorité: 18.09.2007 ES 200702469 P
(71) Demandeur: LAIP, S.A., 48220 Abadiano (ES)
(72) Inventeur: Larraskitu Bernaola, Aitor, 48220 Abadiano (Bizkaia) (ES)
(74) Mandataire: Urizar Barandiaran, Miguel Angel

(57) **Abrégé**

Adaptateur pour porte-outils à système de refroidissement employant une quantité minime de lubrifiant, dans lequel le corps (C) du porte-outils dispose intérieurement, de façon démontable, d'au moins un tube refroidisseur (1) et d'une vis de régulation (3) disposés coaxialement, avec la possibilité de déplacement axial de la vis de régulation (3) par rapport au tube (1).

On dispose également, pouvant être démontée, une bague réductrice (2) entre ledit tube refroidisseur (1) et ladite vis de régulation (3), avec la possibilité de déplacement axial de la vis de régulation (3) par rapport au tube (1) et à la bague réductrice (2).

Cet ensemble d'éléments démontables est incorporé dans les systèmes de fixation des outils de coupe (porte-outils) standard et les rend appropriés à être utilisés dans les systèmes qui employent une quantité minime de lubrifiant, connus également sous le nom de systèmes écologiques de refroidissement ou systèmes MQL.

## Description

L'objet de l'invention est un adaptateur porte-outils, de ceux qui comportent un système de refroidissement incorporé, ce système de réfrigération étant du type qui emploie une quantité minime de lubrifiant (systèmes connus sous le nom de MQL).

Dans l'état actuel de la technique, on connaît déjà des adaptateurs pour fixer les outils de coupe sur la machine-outil, qui comportent un système de refroidissement interne incorporé.

À l'heure actuelle, on produit, avec le refroidissement conventionnel, une inondation de fluide de refroidissement dans les zones de coupe ou d'usinage. Cette inondation peut arriver à atteindre un volume de 250 litres/heure. La conséquence en est que le système pourrait être très efficace, mais, en réalité, il est complètement inefficace.

Dans le système de lubrification du type connu sous le nom de MQL, on humidifie strictement la zone de travail (outil-pièce-copeaux) avec une très faible quantité de lubrifiant, de façon à optimiser la consommation de fluide, en le réduisant jusqu'à 96 pour cent par rapport à la lubrification conventionnelle.

S'agissant de systèmes de pulvérisation qui permettent de projeter, au moyen de flux, l'huile mélangée à l'air sous pression, on peut la réguler pour que la consommation soit la plus basse possible.

Dans des conditions optimales d'application, on obtient une lubrification auto-consommable, sans restes de lubrifiant sur la pièce usinée ni sur les copeaux et, par conséquent, avec une pollution environnementale pratiquement nulle, l'adaptateur disposant pour cela, à l'intérieur du corps du porte-outils, de façon démontable, au moins un tube refroidisseur et une vis de régulation disposés coaxialement, avec la possibilité de déplacement axial de la vis de régulation par rapport au tube, et le système de refroidissement emploie comme lubrifiant/réfrigérant un mélange pulvérisé de fluide et d'air sous pression, qui conflue dans une chambre intérieure du corps du porte-outils, à laquelle a accès également l'extrémité libre du tube muni du chanfrein, la quantité de ce mélange pulvérisé étant réglable au moyen de ladite vis.

Le porte-outils sert d'élément de transmission du couple de coupe de la machine à l'outil, étant également conducteur du refroidissement qui passe à l'intérieur.

Afin que le système fonctionne correctement, la conception de la zone où circule le lubrifiant est très importante. Dans l'adaptateur selon l'invention, ce fonctionnement correct est obtenu en introduisant un ensemble d'éléments démontables à l'intérieur d'un porte-outils connu, de ceux qui utilisent un refroidssement interne.

Cet ensemble d'éléments démontable est incorporé aux systèmes de fixation des outils de coupe (porte-outils) standard et les rend appropriés à une utilisation dans les systèmes qui emploient une quantité minime de lubrifiant, connus également sous le nom de systèmes écologiques de refroidissement ou systèmes MQL.

La nouveauté réside également dans la conception et la disposition de ces éléments internes démontables, avec l'emploi desquels il n'est pas nécessaire de modifier le porte-outils ou d'exécuter un porte-outils spécial pour travailler avec ce type de lubrification.

Pour mieux comprendre l'objet de la présente invention, on représente sur les plans une forme préférentielle de réalisation pratique, susceptible de changements accessoires, qui n'en dénaturent pas le fondement.
La figure 1 représente une vue générale de profil en long d'un adaptateur pour porte-outils avec le système de refroidissement incorporé, conformément à l'invention, partiellement sectionné et avec un outil (h) incorporé.

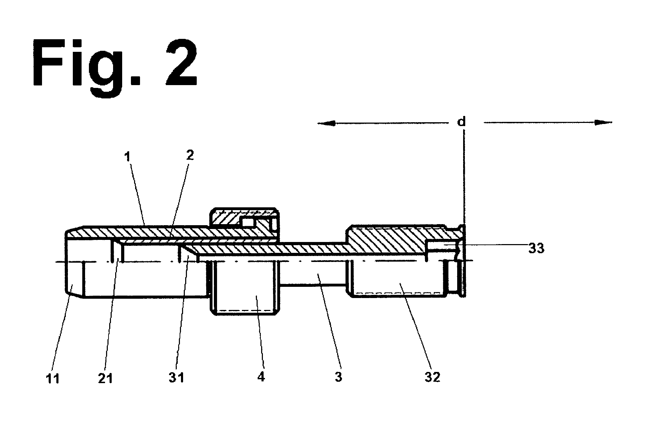

La figure 2 représente une vue générale de profil en long de l'ensemble des éléments démontables (1), (2), (3) montés entre eux et partiellement sectionnés, dépourvus de l'outil (h) et du corps du porte-outils (C) de la figure 1.

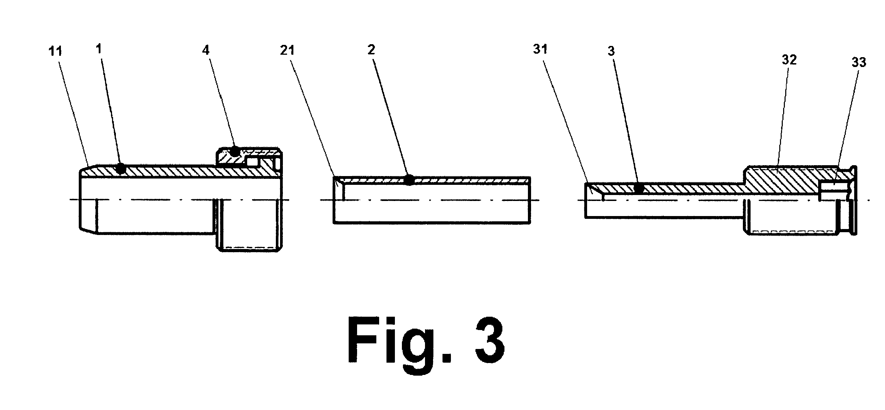

La figure 3 représente une vue générale similaire à la figure 2, avec les éléments démontables (1), (2), (3) disposés pour leur montage.

On décrit ci-dessous un exemple de réalisation pratique, non limitative, de la présente invention.

Conformément à l'invention, le corps (C) du porte-outils dispose à l'intérieur, pouvant être démontés, au moins un tube refroidisseur (1) et une vis de régulation (3) disposés coaxialement, avec la possibilité de déplacement axial de la vis de régulation (3) par rapport au tube (1). Il dispose également, pouvant être démontée, une bague réductrice (2) entre ledit tube refroidisseur (1) et ladite vis de régulation (3), avec la possibilité de déplacement axial de la vis de régulation (3) par rapport au tube (1) et à la bague réductrice (2).

L'ensemble des éléments démontables consiste essentiellement quoique pas exclusivement, dans les composants cités : un tube pour le passage du réfrigérant (1), une bague réductrice (2) et une vis de régulation (3).

Le montage sur le corps porte-outils (C) est descriptif et ne limite pas l'utilisation sur tout autre type de porte-outils.

Conformément à l'invention, le corps (C) du porte-outils est de ceux qui utilisent un refroidissement interne, le fluide réfrigérant atteignant une chambre interne (C₁).

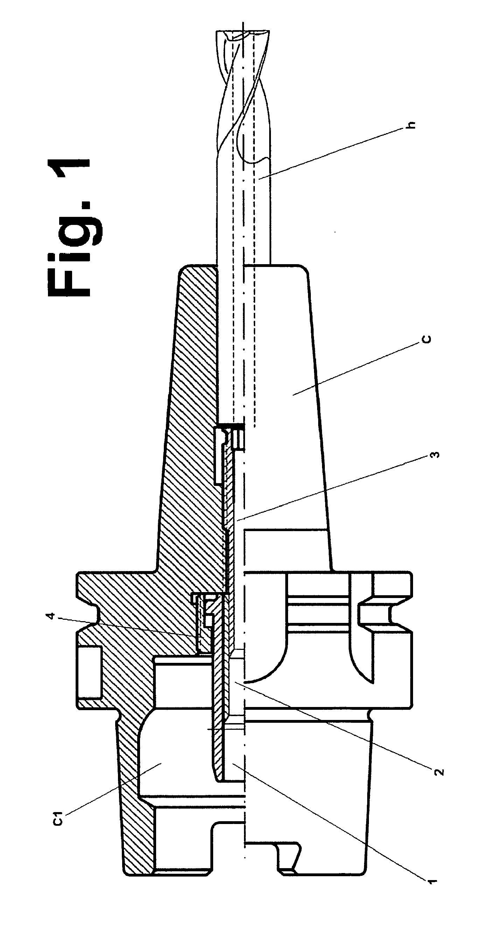

Selon la réalisation représentée, à l'intérieur dudit corps (C), sont disposés coaxialement et pouvant être démontés, un tube refroidisseur (1), une bague réductrice (2) et une vis de régulation (3) -voir figure 1.

Le tube (1) comporte un chanfrein périmétral externe (11) à son extrémité intérieure libre, qui arrive jusqu'à ladite chambre (C₁) et il est monté dans le corps (C) par son extrémité opposée, en employant, par exemple, une frette filetée (4).

La bague réductrice (2) comporte un chanfrein périmétral interne (21) à l'une de ses extrémités et elle est disposée à l'intérieur dudit tube (1) nivelée avec le bout du tube (1) par son extrémité opposée.

La vis de régulation (3) comporte un chanfrein périmétral interne (31) à l'une de ses extrémités et définit une tête filetée (32) pour son montage dans le corps du porte-outil (C) par son extrémité opposée ; des conformations (33) ayant été prévues dans cette tête (32) pour le manipuler dans le but d'obtenir son déplacement axial de réglage (d) avant de mettre en place l'outil (h).

## Revendications

1. Adaptateur pour porte-outils à système de refroidissement employant une quantité minime de lubrifiant, **se caractérisant par le fait que** le corps (C) du porte-outil dispose intérieurement, pouvant être demontés, au moins un tube refroidisseur (1) et une vis de régulation (3) disposés coaxialement, avec la possibilité de déplacement axial de la vis de régulation (3) par rapport au tube (1).

2. Adaptateur pour porte-outils à système de refroidissement employant une quantité minime de lubrifiant, selon la revendication antérieure, **caractérisé en ce qu'**il dispose également, de façon démontable, d'une bague réductrice (2) entre ledit tube refroidisseur (1) et ladite vis de régulation (3), avec la possibilité de déplacement axial de la vis de régulation (3) par rapport au tube (1) et à la bague réductrice (2).

3. Adaptateur pour porte-outils à système de refroidissement employant une quantité minime de lubrifiant, selon les revendications antérieures, **caractérisé en ce que** ledit tube refroidisseur (1) comporte un chanfrein périmétral externe (11) ce qui fait que son extrémité intérieure libre présente une configuration tronconique.

4. Adaptateur pour porte-outils à système de refroidissement employant une quantité minime de lubrifiant, selon les revendications antérieures, **caractérisé en ce que** lesdites bague réductrice (2) et vis de régulation (3) comportent, chacune d'elles, des chanfreins périmétraux internes (21), (31) ce qui fait que leurs extrémités intérieures libres respectives présentent une configuration tronconique inversée.
